# EUROPÄISCHE PATENTSCHRIFT

(11) **EP 2 705 583 B1**
(45) Veröffentlichungstag und Bekanntmachung des Hinweises auf die Patenterteilung: **26.08.2015**
(21) Anmeldenummer: 12738084.8
(22) Anmeldetag: 13.07.2012
(51) Int. Cl.: H02B 1/30, H02G 3/04, H02G 11/00

(54) **Elektroschrank mit einer Vorrichtung zur Führung elektrischer Leitungen**
Electrical cabinet with a device for guiding electric lines
Armoire électrique avec un dispositif pour le guidage de lignes électriques

(30) Priorität: 28.07.2011 DE 102011080049
(43) Veröffentlichungstag der Anmeldung: 12.03.2014
(73) Patentinhaber: Siemens Aktiengesellschaft, 80333 München (DE)
(72) Erfinder: WILHELM, Horst, 93073 Neutraubling (DE)
(86) Internationale Anmeldenummer: PCT/EP2012/063812
(87) Internationale Veröffentlichungsnummer: WO 2013/014008

(56) Entgegenhaltungen:
- DE-A1- 10 126 785
- DE-C1- 4 302 835
- DE-U1- 29 617 323
- DE-U1-202007 006 864
- US-A1- 2008 290 769
- US-B1- 6 812 407

## Beschreibung

Die Erfindung betrifft einen Elektroschrank mit einer Vorrichtung zur Führung elektrischer Leitungen von einem Installationsbereich zur Tür dieses Elektroschranks.

Die Installation von elektrischen Einrichtungen, insbesondere von Lasttrennleisten, in einem Schaltschrank beziehungsweise Elektroschrank wird üblicherweise durch Abdeckungen und/oder Türen geschützt, um sowohl das Bedienpersonal vor Einflüsse aus dem Innenraum des Schaltschranks, als auch umgekehrt die elektrischen Installationen gegen Einflüsse von außen zu schützen. Nicht belegte Schalterplätze, beispielsweise nicht belegte Lasttrennleistenplätze, werden dabei durch Leerfeldabdeckungen verschlossen.

An den Türen von Schaltschränken werden typischerweise Anzeige- oder Bedienvorrichtungen angebracht. Beispielsweise können Voltmeter oder Stromanzeigegeräte so in der Tür eines Elektroschranks angebracht sein, dass das Bedienpersonal auf den Zustand der Einbauten des Elektroschranks zurückschließen kann, ohne den Schaltschrank beziehungsweise Elektroschrank zu öffnen. Die Bedien- bzw. Anzeigeelemente in der Tür des Elektroschranks müssen mit den Einbauten des Elektroschranks durch elektrische Leitungen verbunden werden. Dazu wird typischerweise ein flexibler Schlauch zwischen einer Tür und den Einbauten verlegt. Sind die Fächer des Elektroschranks mit Berührungsschutzabdeckungen versehen, so wurde bisher ein Loch in diese Berührungsschutzabdeckung gebohrt und der Schlauch mit den Leitungen an diesem Loch verschraubt. Nachteilig ist dabei, dass der flexible Schlauch fest mit der Berührungsabdeckung verbunden ist, was vor allen Dingen bei einem Entfernen der Berührungsabdeckung, zum Beispiel auf Grund von Wartungsarbeiten, umständlich ist.

Ein gewöhnlicher Elektroschrank ist in US 2008/0290769 A1 offenbart.

Es ist Aufgabe der vorliegenden Erfindung, einen Elektroschrank mit einer Vorrichtung zur Führung elektrischer Leitungen von einem Installationsbereich zur Tür des Elektroschranks zur Verfügung zu stellen, die eine fest fixierte Kabelverlegung zur Tür ermöglicht, die aber eine Montage bzw. Demontage von Berührungsschutzabdeckungen ohne Beeinträchtigung der Verdrahtung ermöglicht.

Diese Aufgabe wird durch eine Vorrichtung gemäß Anspruch 1 oder 3 gelöst. Die erfindungsgemäße Aufgabe wird durch eine Vorrichtung zur Führung elektrischer Leitungen von einem Installationsbereich zur Tür eines Elektroschranks gelöst, wobei die elektrischen Leitungen in einem flexiblen Schlauch geführt sind, dessen erstes Ende an der Tür befestigt ist, und wobei das zweite Ende des flexiblen Schlauchs im Installationsbereich des Elektroschranks befestigt ist. Vorteilhaft hierbei ist, dass die Führung der elektrischen Leitungen fest am Elektroschrank fixiert ist.

In einer weiteren Ausgestaltung der Erfindung ist das zweite Ende des flexiblen Schlauchs über einen ersten Bügel an einem Holm des Elektroschranks befestigt. Alternativ ist das zweite Ende des flexiblen Schlauchs über einen zweiten Bügel an einer Hutschiene im Installationsbereich des Elektroschranks befestigt.

Zwischen dem zweiten Ende des flexiblen Schlauchs und dem ersten bzw. zweiten Bügel kann eine Kappe angebracht sein.

In einer weiteren Ausgestaltung der Erfindung umfasst die Vorrichtung eine Berührungsschutzabdeckung, wobei die elektrischen Leitungen durch eine Aussparung oder eine Öffnung der Berührungsschutzabdeckung verlaufen.

Die erfindungsgemäße Vorrichtung kann in einem Installationsverteiler verwendet werden.

Die Erfindung wird im Weiteren anhand der nachfolgenden Figuren beschrieben.
- Fig. 1: Elektroschrank mit Vorrichtung zur Führung elektrischer Leitungen;
- Fig. 2: Detailansicht des Elektroschranks mit Berührungschutzabdeckung und einem ersten Bügel;
- Fig. 3: Detailansicht der montierten Berührungsschutzabdeckung gemäß Fig. 2;
- Fig. 4: Detailansicht des Elektroschranks mit Berührungsschutzabdeckung und einem zweiten Bügel; und
- Fig. 5: Detailansicht mit montierter Berührungsschutzabdeckung gemäß Fig. 4.

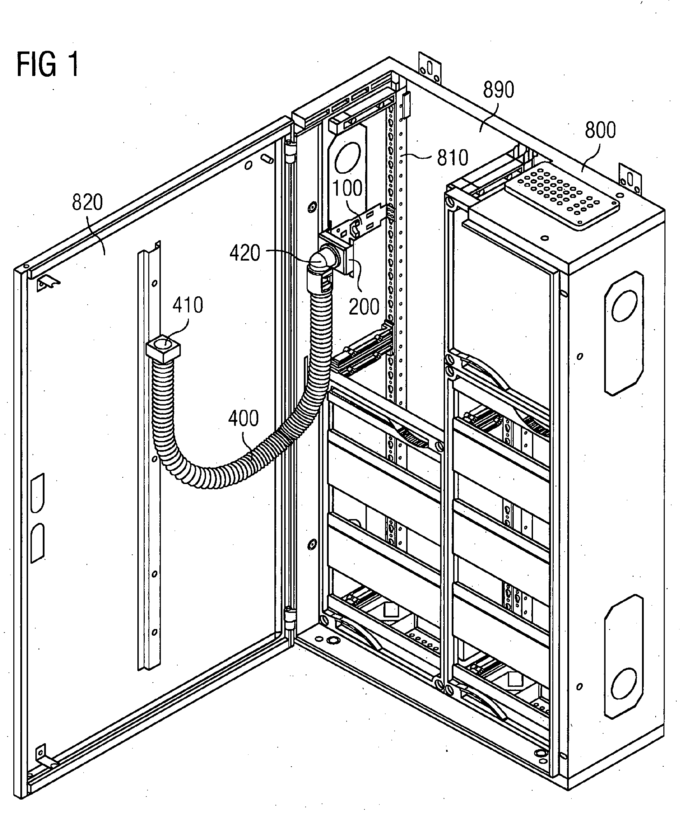

Fig. 1 zeigt einen Elektroschrank 800 mit einer Tür 820, die sich in der "Offenstellung" befindet. Das Grundgerüst des Elektroschranks wird von Holmen 810 gebildet, Der Elektroschrank 800 umfasst einen Installationsbereich 890, in dem sich Einbauten befinden. Um beispielsweise Anzeigeelemente in der Tür 820 mit Strom oder Signalen der Einbauten zu versorgen, werden elektrische Leitungen vom Installationsbereich 890 zur Tür 820 durch einen flexiblen Schlauch 400 geführt.

Das erste Ende 410 des flexiblen Schlauchs 400 ist an der Tür 820 des Elektroschranks 800 befestigt. Das zweite Ende 420 des flexiblen Schlauchs 400 ist im Installationsbereich 890 des Elektroschranks 800 befestigt. Die Bautiefe des Elektroschranks und der Einbauten ist so gewählt, dass die Tür 820 des Elektroschranks 800 verschließbar ist und der flexible Schlauch 400 im geschlossenen Zustand der Tür 820 sich zwischen Tür 820 und den Einbauten des Elektroschranks 800 befindet.

Das zweite Ende 420 des flexiblen Schlauchs 400 ist über einen ersten Bügel 100 an einem Holm 810 des Elektroschranks 800 befestigt. Typischerweise wird dafür ein von der Tür abgewandter, hinterer Holm 810 des Elektroschranks 800 verwendet. Zwischen dem zweiten Ende 420 des flexiblen Schlauchs 400 und dem ersten Bügel 100 kann eine Kappe 200 angeordnet sein.

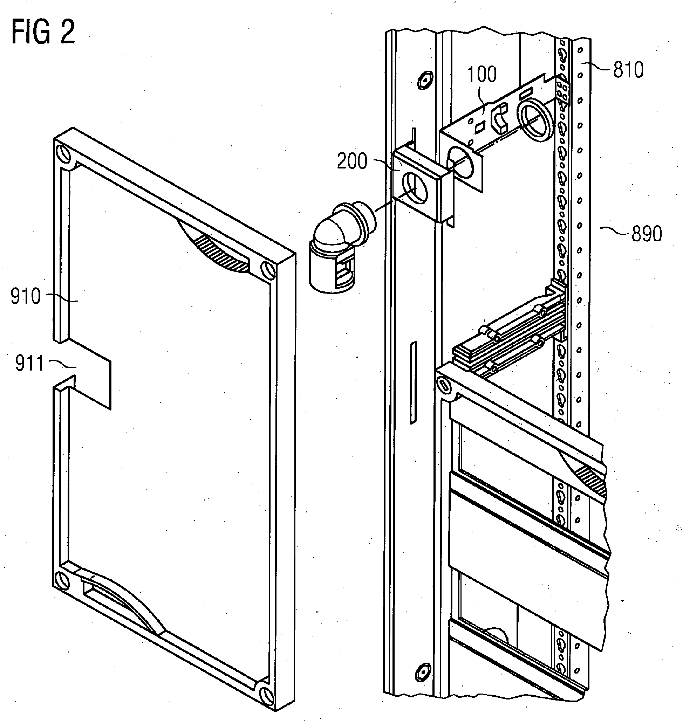

Fig. 2 zeigt eine Detailansicht des Elektroschranks 800 mit einer Berührungsschutzabdeckung 910 und einem ersten Bügel 100. Der Bügel 100 ist an einem Holm 810 des Elektroschranks 800 befestigt und liegt im Installationsbereich 890 des Elektroschranks 800. Typischerweise wird dafür ein von der Tür abgewandter, hinterer Holm 810 des Elektroschranks 800 verwendet. Die Berührungsschutzabdeckung 910 umfasst eine Aussparung 911, durch die die elektrischen Leitungen des flexiblen Schlauchs 400 geführt werden. Somit ist es möglich, die Berührungsschutzabdeckung 910 vom Elektroschrank 800 zu entfernen, ohne die Fixierung des zweiten Endes 420 des flexiblen Schlauchs 400 zu lösen beziehungsweise zu demontieren.

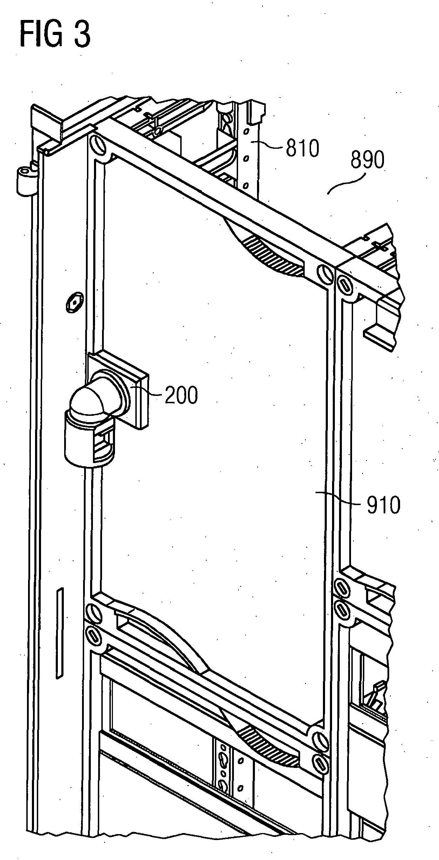

Fig. 3 zeigt dieselbe Detailansicht entsprechend der Fig. 2 des Elektroschranks 800 mit montierter Berührungsschutzabdeckung 910. Die Kappe 200, die sich zwischen zweitem Ende 420 des flexiblen Schlauchs 400 und dem ersten Bügel 100 befindet, passt in die Aussparung 911 der Berührungsschutzabdeckung 910. Die Berührungsschutzabdeckung 910 gemäß Fig. 2 und Fig. 3 kann somit beispielsweise bei Montage- oder Wartungsarbeiten von den Einbauten des Elektroschranks 800 gelöst und entfernt werden, ohne dass die Führung der elektrischen Leitungen demontiert werden muss beziehungsweise automatisch mit demontiert wird in dem Fall, dass die Führung der elektrischen Leitungen fest mit der Berührungsschutzabdeckung verbunden ist. Vorteilhaft hierbei ist, dass die Berührungsschutzabdeckung 910 leicht ausgewechselt und ersetzt werden kann. Ebenfalls vorteilhaft ist, dass die Führung der elektrischen Leitungen im flexiblen Schlauch 400 nach der erstmaligen Montage fixiert ist, und nicht im Rahmen von Arbeiten an der Berührungsschutzabdeckung 910 demontiert werden muss.

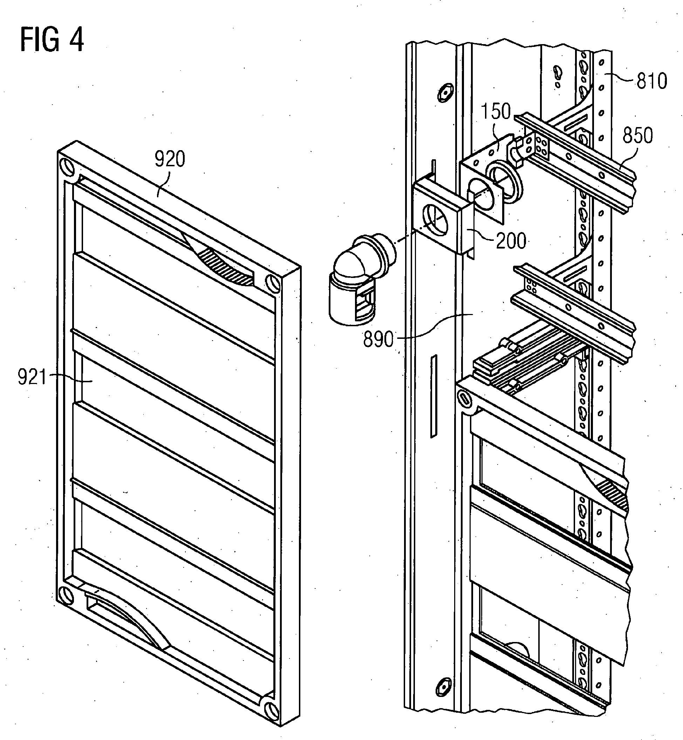

Fig. 4 zeigt eine Detailansicht einer weiteren Berührungsschutzabdeckung 920 im Elektroschrank 800. Das zweite Ende 420 des flexiblen Schlauchs 400 wird an der Kappe 200 angeschlossen und von einem zweiten Bügel 150 an einer Hutschiene 850 im Installationsbereich 890 des Elektroschranks 800 gehalten. Da die Hutschiene 850 von einem hinteren Holm 810 gehalten wird, ist der zweite Bügel 150 längenmäßig kürzer ausgebildet als der erste Bügel 100, der direkt am hinteren Holm 810 des Elektroschranks 800 befestigt ist. Die Berührungsschutzabdeckung 920 umfasst standardmäßig ausgebildete Öffnungen 920, die schlitzförmig ausgebildet sind. Die Berührungsschutzabdeckung 910 kann so im Elektroschrank 800 installiert werden, dass der flexible Schlauch 400 durch eine dieser standardmäßigen Öffnung 921 verläuft.

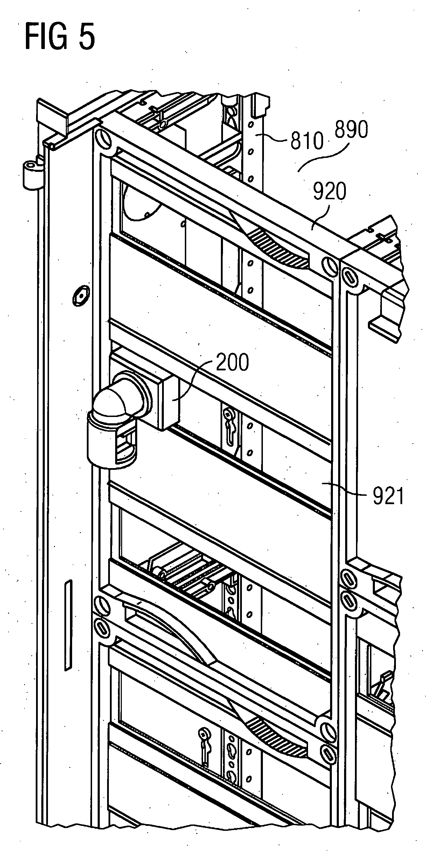

Fig. 5 zeigt dieselbe Detailansicht entsprechend der Fig. 4, wobei die weitere Berührungsschutzabdeckung 920 im Elektroschrank 800 montiert ist. Die Kappe 200, die sich zwischen dem zweiten Ende 420 des flexiblen Schlauchs 400 und dem zweiten Bügel 150 befindet, ragt aus der Öffnung 921 der Berührungsschutzabdeckung 920 heraus. Nach Montage des flexiblen Schlauchs 400 am Elektroschrank 800 und der Befestigung des ersten Endes 410 an der Tür 820 des Elektroschranks 800 und der Befestigung des zweiten Endes 420 des flexiblen Schlauchs 400 an der Kappe 200, kann die Berührungsschutzabdeckung 920 zwar vom Elektroschrank 800 abgenommen werden, auch wenn die Berührungsschutzabdeckung 920 nicht ausgetauscht werden kann. Dadurch, dass die standardmäßige Öffnung 921 durch den Rahmen der Berührungsschutzabdeckung 920 begrenzt wird, wird der flexible Schlauch 400 von der Berührungsschutzabdeckung 920 umschlossen.

Vorteilhaft ist hierbei, dass die Führung der elektrischen Leitungen vom Installationsbereich 890 zur Tür 820 des Schaltschranks 800 fest fixiert ist. Berührüngsschutzabdeckungen lassen sich ohne Beeinträchtigung der Verdrahtung entfernen, zumindest lassen sie sich von der Montageposition im Schaltschrank 800 abnehmen.

## Patentansprüche

1. Elektroschrank (800), dessen Grundgerüst von Holmen (810) gebildet wird, aufweisend:
- eine Tür (820), die zwischen einen Offenstellung und einem geschlossenen Zustand bewegbar ist,
- einen Installationsbereich (890), in dem sich Einbauten befinden,
- elektrische Leitungen, die vom Installationsbereich (890) zur Tür (820) geführt sind,
**dadurch gekennzeichnet,**
- **dass** die elektrischenLeitungen durch einen flexiblen Schlauch (400) des Elektroschranks (800) geführt sind, wobei ein erstes Ende (410) des flexiblen Schlauchs (400) an der Tür (820) des Elektroschranks (800) und ein zweites Ende (420) des flexiblen Schlauchs (400) im Installationsbereich (890) des Elektroschranks (800) befestigt sind, wobei der flexible Schlauch (400) sich im geschlossenen Zustand der Tür (820) zwischen Tür (820) und den Einbauten des Elektroschranks (800) befindet,
- **dass** der Elektroschrank (800) einen ersten Bügel (100) aufweist, über den das zweite Ende (420) des flexiblen Schlauchs (400) an einem Holm (810) des Elektroschranks (800) befestigt ist, und
- **dass** der Elektroschrank (800) eine Berührungsschutzabdeckung (910) aufweist, die eine Aussparung (911) umfasst, durch die der flexible Schlauch (400) geführt ist.

2. Elektroschrank (800) nach Anspruch 1,
**dadurch gekenntzeichnet,**
dass zwischen dem zweiten Ende (420) des flexiblen Schlauchs (400) und dem ersten Bügel (100) eine Kappe (200) angeordnet ist.

3. Elektroschrank (800), dessen Grundgerüst von Holmen (810) gebildet wird, aufweisend:
- eine Tür (820), die zwischen einen Offenstellung und einem geschlossenen Zustand bewegbar ist,
- einen Installationsbereich (890), in dem sich Einbauten befinden,
- elektrische Leitungen, die vom Installationsbereich (890) zur Tür (820) geführt sind,
**dadurch gekennzeichnet,**
- **dass** die elektrischen Leitungen durch einen flexiblen Schlauch (400) des Elektroschranks (800) geführt sind, wobei ein erstes Ende (410) des flexiblen Schlauchs (400) an der Tür (820) des Elektroschranks (800) und ein zweites Ende (420) des flexiblen Schlauchs (400) im Installationsbereich (890) des Elektroschranks (800) befestigt sind, wobei-der flexible Schlauch (400) sich im geschlossenen Zustand der Tür (820) zwischen Tür (820) und den Einbauten des Elektroschranks (800) befindet,
- **dass** der Elektroschrank (800) einen zweiten Bügel (150) und eine Kappe (200) aufweist, wobei das zweite Ende (420) des flexiblen Schlauchs (400) an der Kappe (200) angeschlossen ist und von dem zweiten Bügel (150) an einer Hutschiene (850) im Installationsbereich (890) des Elektroschranks (800) gehalten ist, und
- **dass** der Elektroschrank (800) eine Berührungsschutzabdeckung (920) aufweist, die schlitzförmig ausgebildete Öffnungen (921) umfasst, durch die der flexible Schlauch (400) geführt ist.

4. Elektroschrank (800) gemäß Anspruch 3,
**dadurch gekennzeichnet,**
**dass** die Kappe (200), die sich zwischen dem zweiten Ende (420) des flexiblen Schlauchs (400) und dem zweiten Bügel (150) befindet, aus der Öffnung (921) der Berührungsschutzabdeckung (920) herausragt.

5. Vorrichtung gemäß Anspruch 3 oder 4,
**dadurch gekennzeichnet, dass** der flexible Schlauch (400) von der Berührungsschutzabdeckung (920) umschlossen ist.

## Claims

1. Electrical cabinet (800), the basic framework of the said electrical cabinet being formed by bars (810), having:
- a door (820) which can be moved between an open position and a closed state,
- an installation region (890) in which internal fittings are located,
- electrical lines which are routed from the installation region (890) to the door (820),
**characterized**
- **in that** the electrical lines are routed through a flexible hose (400) of the electrical cabinet (800), wherein a first end (410) of the flexible hose (400) is fastened to the door (820) of the electrical cabinet (800), and a second end (420) of the flexible hose (400) is fastened in the installation region (890) of the electrical cabinet (800), wherein the flexible hose (400) is located between the door (820) and the internal fittings of the electrical cabinet (800) in the closed state of the door (820),
- **in that** the electrical cabinet (800) has a first clip (100) by means of which the second end (420) of the flexible hose (400) is fastened to one bar (810) of the electrical cabinet (800), and
- **in that** the electrical cabinet (800) has a shock-hazard protection cover (910) which comprises a cutout (911) through which the flexible hose (400) is routed.

2. Electrical cabinet (800) according to Claim 1, **characterized**
**in that** a cap (200) is arranged between the second end (420) of the flexible hose (400) and the first clip (100).

3. Electrical cabinet (800), the basic framework of the said electrical cabinet being formed by bars (810), having:
- a door (820) which can be moved between an open position and a closed state,
- an installation region (890) in which internal fittings are located,
- electrical lines which are routed from the installation region (890) to the door (820),
**characterized**
- **in that** the electrical lines are routed through a flexible hose (400) of the electrical cabinet (800), wherein a first end (410) of the flexible hose (400) is fastened to the door (820) of the electrical cabinet (800), and a second end (420) of the flexible hose (400) is fastened in the installation region (890) of the electrical cabinet (800), wherein the flexible hose (400) is located between the door (820) and the internal fittings of the electrical cabinet (800) in the closed state of the door (820),
- **in that** the electrical cabinet (800) has a second clip (150) and a cap (200), wherein the second end (420) of the flexible hose (400) is connected to the cap (200) and is held by the second clip (150) on a top-hat rail (850) in the installation region (890) of the electrical cabinet (800), and
- **in that** the electrical cabinet (800) has a shock-hazard protection cover (920) which comprises openings (921) which are designed in the form of slots and through which the flexible hose (400) is routed.

4. Electrical cabinet (800) according to Claim 3,
**characterized**
**in that** the cap (200), which is located between the second end (420) of the flexible hose (400) and the second clip (150), projects out of the opening (921) in the shock-hazard protection cover (920).

5. Apparatus according to Claim 3 or 4, **characterized in that** the flexible hose (400) is surrounded by the shock-hazard protection cover (920).

## Revendications

1. Armoire électrique (800) dont la structure de base est formée de longerons (810), présentant :
- une porte (820), qui est mobile entre une position d'ouverture et un état fermé,
- un secteur d'installation (890), dans lequel se trouvent des éléments,
- des fils électriques, qui sont guidés du secteur d'installation (890) jusqu'à la porte (820),
**caractérisée en ce que**,
- les fils électriques sont guidés grâce à un tuyau flexible (400) de l'armoire électrique (800), une première extrémité (410) du tuyau flexible (400) étant fixée au niveau de la porte (820) de l'armoire électrique (800) et une seconde extrémité (420) du tuyau flexible (400) étant fixée dans le secteur d'installation (890) de l'armoire électrique (800), le tuyau flexible (400) se trouvant en un état fermé de la porte (820) entre la porte (820) et les éléments de l'armoire électrique (800),
- l'armoire électrique (800) présente un premier étrier (100), par l'intermédiaire duquel la seconde extrémité (420) du tuyau flexible (400) est fixée au niveau d'un longeron (810) de l'armoire électrique (800), et
- l'armoire électrique (800) présente un panneau de protection antichoc (910), qui comporte un évidement (911) à travers lequel est guidé le tuyau flexible (400).

2. Armoire électrique (800) selon la revendication 1,
**caractérisée en ce que**,
une coiffe (200) est agencée entre la seconde extrémité (420) du tuyau flexible (400) et le premier étrier (100).

3. Armoire électrique (800), dont la structure de base est formée de longerons (810), présentant :
- une porte (820), qui est mobile entre une position d'ouverture et un état fermé,
- un secteur d'installation (890), dans lequel se trouve des éléments,
- des fils électriques, qui sont guidés du secteur d'installation (890) jusqu'à la porte (820),
**caractérisée en ce que**
- les fils électriques sont guidés grâce à un tuyau flexible (400) de l'armoire électrique (800), une première extrémité (410) du tuyau flexible (400) étant fixée au niveau de la porte (820) de l'armoire électrique (800) et une seconde extrémité (420) du tuyau flexible (400) étant fixée dans le secteur d'installation (890) de l'armoire électrique (800), le tuyau flexible (400) se trouvant en un état fermé de la porte (820) entre la porte (820) et les éléments de l'armoire électrique (800),
- l'armoire électrique (800) présente un second étrier (150) et une coiffe (200), la seconde extrémité (420) du tuyau flexible (400) étant raccordée au niveau de la coiffe (200) et étant maintenue dans le secteur d'installation (890) de l'armoire électrique (800) par le second étrier (150) au niveau d'un profilé chapeau (850), et
- l'armoire électrique (800) présente un panneau de protection antichoc (920) qui comporte des ouvertures (921) réalisées en forme de fentes et à travers lesquelles est guidé le tuyau flexible (400).

4. Armoire électrique (800) selon la revendication 3,
**caractérisée en ce que**,
la coiffe (200), qui se trouve entre la seconde extrémité (420) du tuyau flexible (400) et le second étrier (150), fait saillie hors de l'ouverture (921) du panneau de protection antichoc (920).

5. Dispositif selon la revendication 3 ou 4,
**caractérisé en ce que**,
le panneau de protection antichoc (920) renferme le tuyau flexible (400).
